Europäisches Patentamt

European Patent Office

Office européen des brevets

(19)

(11) Publication number: **0 452 597 A1**

(12) # EUROPEAN PATENT APPLICATION

(21) Application number: **90401062.6**

(22) Date of filing: **19.04.90**

(51) Int. Cl.5: **C02F 1/46**

(43) Date of publication of application:
**23.10.91 Bulletin 91/43**

(84) Designated Contracting States:
**AT BE CH DE DK ES FR GB GR IT LI LU NL SE**

(71) Applicant: **QUANEN ENVIRONMENTAL
PROTECTION TECHNOLOGY CO., LTD.
11-5F, No. 309, Sung-Chiang Rd.,
Taipei(TW)**

(72) Inventor: **You, Ching-Chyr
No. 28, Chung-Ming 17th St.
Tainan City(TW)**

(74) Representative: **Bouju, André
Cabinet André Bouju B.P. 6250
F-75818 Paris Cédex 17(FR)**

(54) **Apparatus for electrolytic treatment of liquid media.**

(57) An apparatus for electrolytic treatment of liquid media includes an electrolytic cell (10) having a plurality of horizontally spaced electrode plates (2) mounted in the electrolytic cell (10). The electrode plates (2) are alternately connected to positive and negative poles (81, 82) of a DC power supply for electrolytic treatment of liquid media when the liquid media are passed through the electrode plates (2) from a water inlet to a water outlet, which are respectively formed in the bottom portion (6) and the top portion (5) of the electrolytic cell (10). Every two adjacent electrode plates (2) has a scraping member (3) with two edge portions respectively contacting two opposed surfaces of the adjacent electrode plates (2). A driving mechanism is provided for driving the scraping members (3) to move in such a manner that the edge portions of each of the scraping members (3) can repeatedly sweep the opposed surfaces of the adjacent electrode plates (2).

FIG.2A

EP 0 452 597 A1

This invention relates to an electrolytic apparatus for treating liquid media, more particularly to an electrolytic apparatus for continuously treating liquid media so as to enhance the electrolytic efficiency thereof.

It is well known that many polar organic chemical molecules and ionic soluble compounds can be removed efficiently and economically from industrial wastewater. U.S. Patent Nos. 3926754, 4036726, 4123339, and European Patent Publication No. 0295696 disclose a process and apparatus wherein waste water is caused to flow between a plurality of spaced, parallel electrode plates with an electric current passing between said electrodes. It was discovered that when the anode has a surface or a portion of the surface of iron, an iron alloy or an insoluble iron compound, an iron compound such as iron hydroxide will be produced anodically. In turn, an insoluble trivalent chromium compound, preferably hydroxide, will be produced to complex with or otherwise physically or chemically combine with the insoluble iron compound, thereby permitting removal from the solution. It was also discovered that the iron compound or complex formed will reduce the hexavalent chromium and coprecipitate therewith. U.S. Patent No. 3926754 discloses an apparatus for the electrochemical treatment of wastewater including stacks of parallel electrode plates in a vertically spaced relation. In addition, a problem was encountered in the use of cold and hot rolled steel anodes in commercial scale systems in the formation of an insoluble insulating iron oxide layer on the electrode surface, often underneath the gelatinous precipitants which can give rise to high over voltages and generation of oxygen at the anode. In U.S. Patent No. 4123339 this problem is solved by a periodic wash with a diluted inorganic acid passed through the electrolytic cell, removing any substances on or lodged between the surfaces of the electrodes. However, such a periodic wash process makes the continuous electrolysis of wastewater impossible. Moreover, to treat wastewater continuously, additional pipe lines and operations including the drainage of the electrolytic solution, acid washing operation and recycling of the acid solution, etc., must be provided in a manner as described in U.S. Patent No. 4123339, inconveniencing the operator.

It is therefore a main object of this invention to provide an electrolytic apparatus for treating liquid media, such as industrial wastewater, which can be operated continuously without interrupting the treatment of liquid media.

It is another object of this invention to provide an electrolytic apparatus for treating liquid media, such as industrial wastewater, which can cause wastewater to evenly and thoroughly pass through the electrode plates so as to enhance the electrolytic efficiency thereof.

It is still another object of this invention to provide an electrolytic apparatus for treating liquid media, such as industrial wastewater, in which the treatment capacity can be optionally changed.

Accordingly, an electrolytic apparatus for treating liquid media, such as wastewater, of this invention includes a plurality of spaced parallel electrode plates, each of which has an upper surface and a lower surface. Every two adjacent electrode plates has a scraping member mounted between the lower surface of one of said adjacent electrode plates and the upper surface of the other one of said adjacent electrode plates. Each of the scraping members has two opposed edges respectively contacting the lower and the upper surfaces of the adjacent electrode plates. The scraping members are driven by a driving mechanism so as to continuously sweep the lower and upper surfaces of the electrode plates. When wastewater is passed through the electrode plates for electrolytic treatment, the lower and upper surfaces are prevented from forming adherent precipitates.

The scraping member includes a scraper with two elastic blades. The scraper is essentially made of polytetrafluoroethylene (Teflon) which is inherently anti-corrosive and elastic. Thereby, the scraper can elastically abut upon the surfaces of the electrode plates. In addition, since the blades of the scraper are smooth, a proper amount of glass beads may be admixed to said blades to increase the roughness, so that the adherent precipitates on the surfaces of the electrode plates can be easily swept off by the scraper. A crosslinking agent is added into the blades so that polytetrafluoroethylene can be combined with the glass beads.

The driving mechanism of this invention includes a rotating shaft passed through the central portion of the electrode plates and the scrapers, and a motor driving the rotating shaft to rotate, so that said scrapers can be rotated about said rotating shaft for sweeping purposes.

Preferably, each of the electrode plates is circular so as to accommodate the sweeping range of the scrapers, which are rotated about the rotating shaft.

Preferably, the equally spaced, parallel electrode plates are arranged in the electrolytic cell so that the peripheries of said electrode plates are in contact with the inner wall of the electrolytic cell in a sealed relation. Each of the electrode plates has an opening so that the wastewater to be treated can flow through said electrode plates via said openings in said electrode plates.

Most preferably, the equally spaced, parallel electrode plates are horizontally mounted in the electrolytic cell. Each of the openings is spaced annularly from said openings of two adjacent electrode plates at an angle of 180 degrees. Therefore, wastewater can be passed through the electrode plates from the bottom of the electrolytic cell to the top of the electrolytic cell. The flow path of the wastewater is Z-shaped in the electrolytic cell, so that said wastewater can contact the surfaces of the electrode plates evenly and thoroughly.

The sweep of the scraper agitates wastewater, making the electrolytic treatment of wastewater more uniform.

Preferably, the electrolytic cell of the apparatus of this invention is formed with a plurality of stacked ring members. Each of the ring members has an inside diameter slightly smaller than the diameter of each of the circular electrode plates, so that each of said circular electrode Plates can be interposed between the two adjacent ring members at the periphery thereof. Sealing members are provided between the contact surfaces of the electrode plates and the ring members. The ring members are fastened to each other by the usual fasteners. In this way, the treatment capacity of the electrolytic cell can be changed as desired.

Other features and advantages of this invention will become apparent in the following detailed description of a preferred embodiment of this invention with reference to the accompanying drawings, in which:

Fig. 1 is a perspective exploded view of a preferred embodiment of part of an electrolytic apparatus for treating liquid media of this invention;

Fig. 2A is a partially broken sectional front view of a preferred embodiment of an electrolytic apparatus for treating liquid media of this invention;

Figs. 2B to 2D are fragmentary sectional views of the electrode plates and the ring members of this invention;

Fig. 3 is a sectional view of a scraping member of this invention;

Fig. 4 is a schematic top view showing the scraping member of this invention in an operating position; and

Fig. 5 is a sectional schematic view showing the flow direction of wastewater in a electrolytic cell according to this invention.

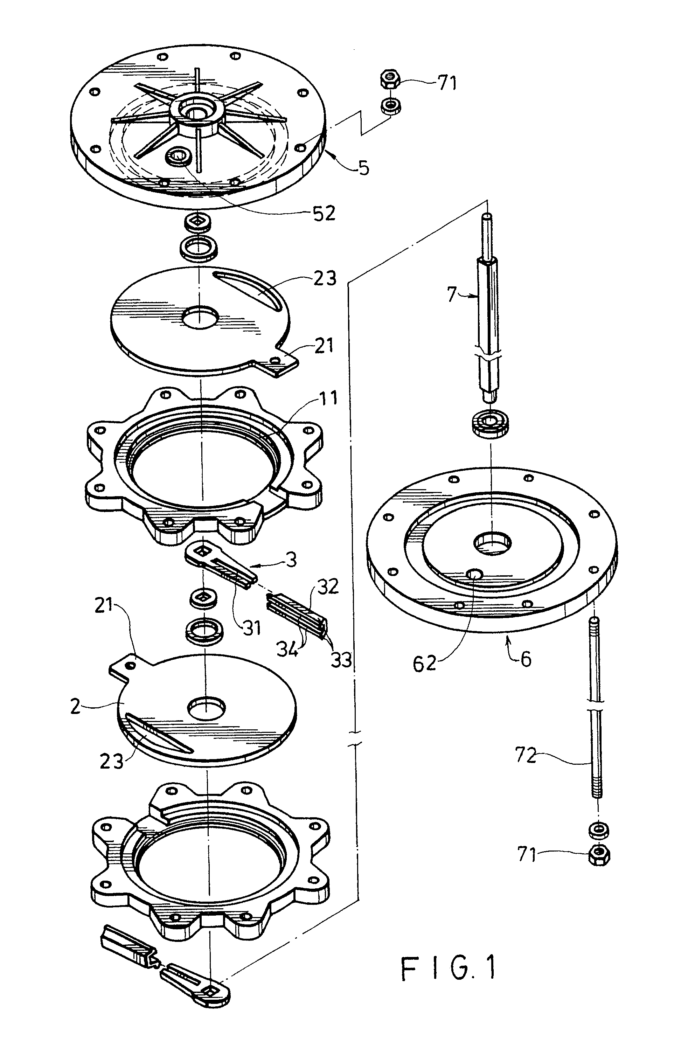

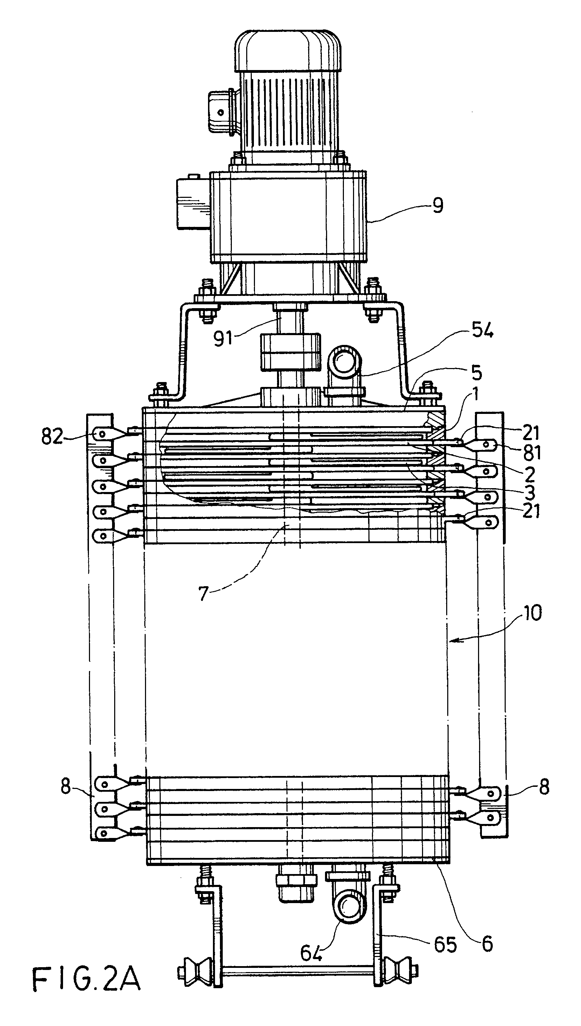

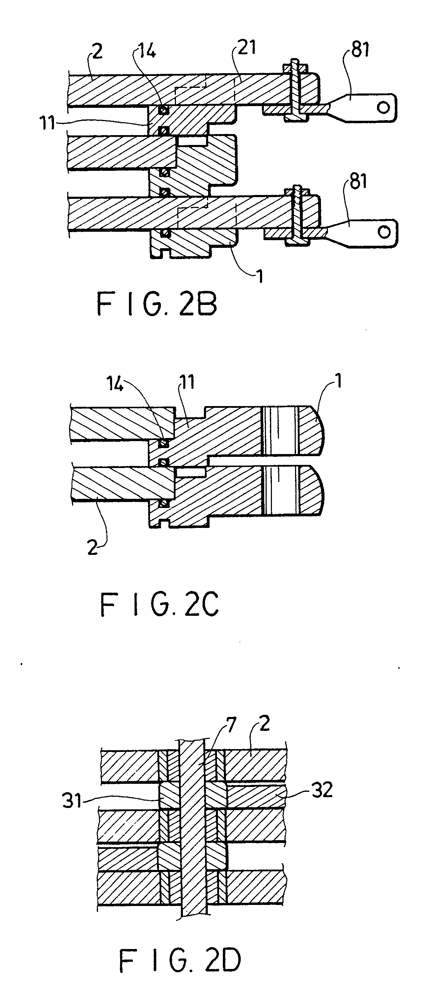

Referring to Figs. 1, 2A, a preferred embodiment of an electrolytic apparatus for treating liquid media, such as industrial wastewater and the like, according to this invention includes an electrolytic cell 10 formed with a plurality of ring members 1 superimposed on each other. Each of the ring members 1 has a stepped inner periphery 11. Top and bottom sealing covers 5, 6 are respectively mounted to the topmost and bottommost ring members 1. The ring members 1 are preferably made of acrylonitrile butadiene styrene. Every two adjacent ring members 1 has a circular electrode plate 2 mounted therebetween. The electrode plates 2 are preferably made of iron as described in U.S. Patent Nos. 3926754, 4036726, 4123339, and European Patent Publication No. 0295696. Each of the electrode plates 2 has an opening 23 formed near the periphery thereof and a shank portion 21 radially extending from the outer periphery thereof. The electrode plates 2 are positioned between the stepped inner peripheries 11 of the ring members 1 and the top and bottom sealing covers 5, 6 in such a manner that each of the openings 23 is spaced annularly from the other said opening 23 of either one of two adjacent electrode plates 2 at an angle of 180 degrees. Seal rings 14 are provided between the contact surfaces of the electrode plates 2 and the inner peripheries 11 of the ring members 1 for sealing purposes, as best illustrated in Figs. 2A, 2B. A rotating shaft 7 is rotatably passed through the central portions of the ring members 1, the electrode plates 2 and the top and bottom sealing cover 5, 6. The rotating shaft 7 is connected to a driving shaft 91 which is driven by a motor 9 mounted above the top sealing cover 5. The top and bottom sealing covers 5, 6 and the ring members 1 are fastened together by means of fastening members such as nuts and threaded rods 71, 72, so that the electrode plates 2 can be sealingly positioned between the top and bottom sealing covers 5, 6 and the ring members 1 as described hereinbefore. The shank portions 21 of the electrode plates 2 are alternately connected to the positive poles 81 and the negative poles 82 of the bus boards 8, which are connected to a DC power supply for electrolytic treatment of wastewater.

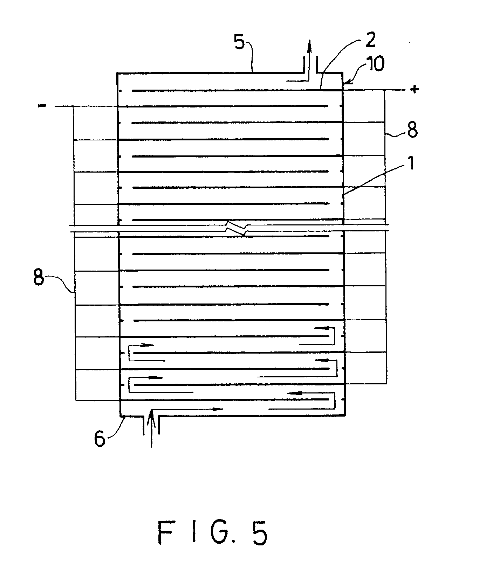

Referring to Fig. 2A, the top sealing cover 5 has an outlet opening 52 to which an outlet tube 54 is connected. The bottom cover 6 has an inlet opening 62 to which an inlet tube 64 is connected. A wheeled support 65 is mounted below the bottom sealing cover 6 to support the electrolytic apparatus of this invention. In operation, a liquid media such as industrial wastewater is passed upward into the electrolytic cell 10 of this invention from the inlet tube 64 and through the electrode plates 2 in a substantially Z-shaped path, as best illustrated in Fig. 5. After being electrochemically treated, wastewater flows out of the electrolytic cell 10 via the outlet tube 54.

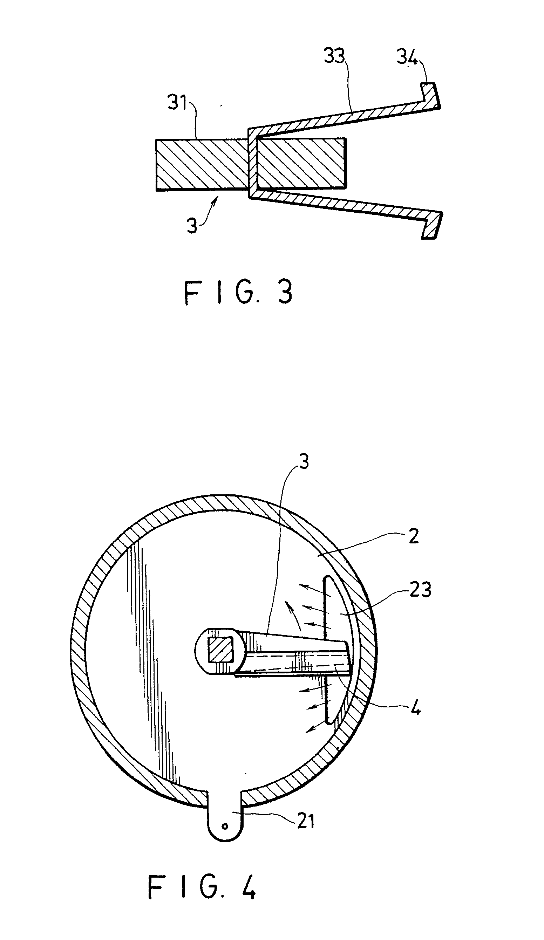

Referring to Figs. 1, 2A, 2D, 3, every two adjacent electrode plates 2 has a scraping member 3 mounted therebetween. The scraping member 3 includes a shank portion 31 connected to the rotating shaft 7 at one end thereof and a scraper 32 held by the shank portion 31. The scraper 32 of generally U-shaped cross section has two elastic blades 33 with two opposed bent edges 34. The blades 33 of the scraper 32 are substantially expended away from each other so that the bent edges 34 thereof can elastically abut upon the opposed surfaces of the adjacent electrode plates 2. In this way, during the electrolytic treatment of wastewater, the scraping member 3 can be rotated by the motor 9 about the rotating shaft 7, thereby sweeping over the opposed surfaces of the adjacent electrode plates 2, as shown in Fig. 4, preventing the surfaces of the electrode plates 2 from forming adherent precipitates. The scraper 32 is essentially made of polytetrafluoroethylene (Teflon) which is inherently anti-corrosive and elastic. In addition, since the blades 33 of the scraper 32 are smooth, a proper amount of glass beads may be admixed to said blades 33 to increase the roughness, so that the adherent precipitates on the surfaces of the electrode plates 2 can be easily swept off by the scraper 32. A crosslinking agent is added into the blades 33, so that polytetrafluoroethylene can be combined with the glass beads. The adherent precipitates scraped from the surfaces of the electrode plates 2 will be taken out of the electrolytic cell 10 by the flow of wastewater.

In a conventional way, the treated wastewater leaving the electrolytic apparatus of this invention may be collected in a tank to allow said treated wastewater to separate into a layer of precipitate or suspension mud and a layer of clear solution. The layer of precipitate or suspension mud may be separated from the layer of clear solution by a filtering device. The clear solution is then be passed through a sand filter for post treatment.

It is found that the electrolytic apparatus for treating wastewater and the like of this invention has the following advantages:

(1) The scraper 32 can continuously sweep off the adherent precipitates on the surfaces of the electrode plates 2, so that the electrolytic treatment of wastewater can proceed continuously without the need for interruption of said treatment.

(2) The openings 23 of the electrode plates 2 are arranged in a staggered relation so that wastewater can more evenly and thoroughly pass through the electrode plates 2. In addition, the sweep of the scraping member 3 agitates wastewater, making the electrolytic treatment of wastewater more uniform.

(3) The stacked structure of the ring members 1 and the electrode plates 2 make the change of the treatment capacity of the electrolytic cell 10 possible.

The material of electrode plates of this invention may be varied according to the property of wastewater. The material is selected from iron, aluminium, iron alloy, aluminium alloy, iron-aluminium alloy, carbon steel and stainless steel. The scraping members 3 must be made of an insulated, anti-corrosive, material, heat-resistant, acid resistant, alkali resistant, and anti-deforming material, such as high performance plastic, e.g. polyvinyl chloride, polypropyrene, polyethylene, polytetrafluoroethylene, acrylonitrile butadiene styrene, Nylon-6 and Nylon-66; and composite material, such as (1) thermosetting plastic steel, unsaturated resin and epoxy resin; and (2) thermoplastic plastic steel, polydifluoroethylene, acrylonitrile butadiene styrene, Nylon-6, Nylon-66, polycarbonate, polypropyrene and polyethylene. In accordance with the present invention the scraping members 3 is preferably made of polytetrafluoroethylene (Teflon).

With this invention thus explained, it is apparent that numerous modifications and variations can be made without departing from the scope and spirit of this invention.

## Claims

1. An apparatus for electrolytic treatment of liquid media including an electrolytic cell (10) having a plurality of horizontally spaced electrode plates (2) mounted therein, said electrolytic cell (10) having a bottom portion (6) and a top portion (5), a water inlet (62) being formed in said bottom portion (6) of said electrolytic cell (10) and a water outlet (52) being formed in said top portion (5) of said electrolytic cell (10), said electrode plates (2) being alternately connected to positive and negative poles (81, 82) of a DC power supply for electrolytic treatment of said liquid media when said liquid media are passed through said electrode plates (2) from said water inlet (62) to said water outlet (52), wherein the improvements are characterized in that every two adjacent electrode plates (2) has a scraping member (3) mounted therebetween, each of said scraping members (3) having two edge portions (34) respectively contacting two opposed surfaces of said adjacent electrode plates (2), and a driving mechanism (9, 91, 7) provided for driving said scraping members (3) to move in such a manner that said edge portions (34) of each of the scraping members (3) can repeatedly sweep said opposed surfaces of said adjacent electrode plates (2).

2. An apparatus for electrolytic treatment of liquid media as claimed in Claim 1, wherein each of said scraping members (3) includes a scraper (32) having two elastic blades (33) with two bent edges respectively contacting said opposed surfaces of said adjacent electrode plates (2).

3. An apparatus for electrolytic treatment of liquid media as claimed in Claim 2, wherein said scraper (32) is made of polytetrafluoroethylene.

4. An apparatus for electrolytic treatment of liquid media as claimed in Claim 1, wherein said driving mechanism includes a rotating shaft (7) rotatably passing through central portions of said electrode plates (2) and engaged with said scraping member (3) so that said scraping member (3) can be rotated about said rotating shaft (7), and a motor provided for driving said rotating shaft (7) to rotate.

5. An apparatus for electrolytic treatment of liquid media as claimed in Claim 4, wherein each of said electrode plates (2) is circular.

6. An apparatus for electrolytic treatment of liquid media as claimed in Claim 1, wherein said electrode plates (2) are made of iron.

7. An apparatus for electrolytic treatment of liquid media as claimed in Claim 1, wherein said electrode plates (2) are made of iron alloy.

8. An apparatus for electrolytic treatment of liquid media as claimed in Claim 1, wherein each of said electrode plates (2) in said electrolytic cell (10) has an opening (23) formed near a periphery thereof, each of said openings (23) being annularly spaced from other said openings (23) of two adjacent electrode plates (2) at an angle of 180 degrees.

9. An apparatus for electrolytic treatment of liquid media as claimed in Claim 8, wherein said electrolytic cell (10) is formed with a plurality of stacked ring members (1) interposed on one another, each of said electrodes being disposed between two adjacent said electrode plates (2), each of said ring members (1) having an inner periphery with a diameter slightly smaller than that of said electrode plate (2) so that said electrode plates (2) can be supported by said ring members (1), sealing members (14) being provided between contacting surfaces of said ring members (1) and said electrode plates (2), and top and bottom sealing covers (5, 6) being respectively mounted to a topmost ring member (1) and a bottommost ring member (1) so as to define said electrolytic cell (10).

71

5

52

23

21

7

11

3

32

31

34

33

21

2

23

62

6

72

71

F I G. 1

FIG.2A

F I G. 2B

F I G. 2C

F I G. 2D

F I G. 3

F I G. 4

F I G. 5

European
Patent Office

EUROPEAN SEARCH
REPORT

Application Number

**EP 90 40 1062**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 668 369   (ARTHUR S. KING)<br>* the whole document *<br>— — — | 1,2 | C 02 F 1/46 |
| A | EP-A-0 209 603   (MIHARA, OSAMU)<br>* page 3, line 17 - page 4, line 23; figure 1 * * abstract *<br>— — — | 1,4 | |
| A | GB-A-1 764 57   (ARTHUR D. SMITH)<br>* page 1, lines 10 - 29 * * page 1, lines 75 - 81 * * page 4; claim 1 *<br>— — — — — | 1 | |

|  |  |
|---|---|
|  | TECHNICAL FIELDS SEARCHED (Int. Cl.5) |
|  | C 02 F<br>C 25 B<br>C 25 C |

The present search report has been drawn up for all claims

| Place of search | Date of completion of search | Examiner |
|---|---|---|
| The Hague | 08 November 90 | GONZALEZ ARIAS M.L. |